# EUROPÄISCHE PATENTSCHRIFT

(11) **EP 3 819 515 B1**
(45) Veröffentlichungstag und Bekanntmachung des Hinweises auf die Patenterteilung: **17.08.2022**
(21) Anmeldenummer: 20205900.2
(22) Anmeldetag: 05.11.2020
(51) Int. Cl.: F16C 33/20, B60N 2/02

(54) **GLEITLAGERVERBUNDWERKSTOFF**
SLIDE BEARING COMPOSITE MATERIAL
MATIÈRE COMPOSITE DE PALIER LISSE

(30) Priorität: 07.11.2019 DE 102019130083
(43) Veröffentlichungstag der Anmeldung: 12.05.2021
(73) Patentinhaber: KS Gleitlager GmbH, 68789 St. Leon-Rot (DE)
(72) Erfinder: Taipalus, Dr. Riitta, 67117 Limburgerhof (DE); Reinicke, Dr. Rolf, 76669 Bad Schönborn (DE)
(74) Vertreter: DREISS Patentanwälte PartG mbB

(56) Entgegenhaltungen:
- EP-A1- 2 532 905
- DE-A1- 2 928 081
- DE-A1- 19 524 968
- DE-B3-102011 089 975
- US-A1- 2018 149 194

## Beschreibung

Die Erfindung betrifft einen Gleitlagerverbundwerkstoff mit einer metallischen Stützschicht, optional mit einer darauf aufgebrachten porösen Trägerschicht und mit einem in die Poren der Trägerschicht eingebrachten oder auf die metallische Stützschicht aufgebrachten Gleitschichtmaterial auf polymerer Kunststoffbasis, mit die tribologischen Eigenschaften verbessernden Füllstoffen, wobei das Gleitschichtmaterial PVDF als polymere Kunststoffbasis umfasst und PTFE enthält.

Aus DE 10 2004 008 633 A1 sind Gleitlagerverbundwerkstoffe auf Basis von PVDF als polymerer Kunststoffbasis des Gleitschichtmaterials bekannt, die außerdem wenigstens 5 Vol.-% PTFE umfassen können. Aus derselben Druckschrift sind Gleitlagerverbundwerkstoffe mit einem Gleitschichtmaterial auf PA-, PES-, PPS oder PTFE-Basis bekannt.

EP 2 069 651 B1 offenbart einen Gleitlagerverbundwerkstoff mit PVDF, PAEK, PEEK, PPS, PES, PEI, LCP oder PA als polymerer Kunststoffbasis des Gleitschichtmaterials, mit höchstens 5 Vol.-% PTFE. Ein Ausführungsbeispiel offenbart 70-90 Volumenprozent PVDF und 5 Volumenprozent PTFE und als Füllstoffe 5-15 Volumenprozent Zinksulfid oder Bariumsulfat.

EP 2 532 905 A1, wie auch deren prioritätsbegründende DE 10 2011 077 008 A1, offenbart wiederum einen Gleitlagerverbundwerkstoff mit PTFE als polymerer Kunststoffbasis des Gleitschichtmaterials und mit Füllstoffen, die in compoundierter Form innerhalb des Gleitschichtmaterials vorliegen. Mit dieser Druckschrift wurde bereits vorgeschlagen, Füllstoffe nicht einzeln der Polymerbasis des Gleitschichtmaterials zuzugeben, sondern diese Füllstoffe zuerst in eine compoundierte Form, also in einen Kunststoffverbund mit einem Thermoplasten oder mit einem Duroplasten zu bringen, die dann wiederum in verhältnismäßig feine compoundierte Partikel zerkleinert werden. Die Füllstoffe werden also in dieser compoundierten Partikelform als Verbundpartikel dann der Polymerbasis zur Bildung des Gleitschichtmaterials zugesetzt. Als Thermoplast der compoundierten Füllstoffzusammensetzung werden PEEK, PA, PPS, PPA genannt. Ausgangspunkt der EP 2 532 905 A1 war ein PTFE basiertes Gleitschichtmaterial, welches hinsichtlich seiner Verschleißfestigkeit verbessert werden sollte.

DE 10 2014 102 125 A1 geht zunächst von einem Gleitlagerverbundwerkstoff mit PTFE als polymerer Kunststoffbasis des Gleitschichtmaterials aus. Da PTFE aber eine eher geringe Festigkeit, hohe Wärmeausdehnung und schlechte Wärmeleitfähigkeit sowie Probleme hinsichtlich der Anhaftung auf einem metallischen Träger aufweist, wird vorgeschlagen, anstelle PTFE als polymere Kunststoffbasis einen thermoplastischen Hochleistungskunststoff zu verwenden, der extrudierbar ist. Bevorzugtermaßen soll hierfür PEAK, PEEK verwendet werden. Diesem Basiskunststoff können weitere fluorhaltige Kunststoffe, wie PTFE, ETFE u.a. und Verschleiß mindernde Füllstoffe insbesondere Molybdändisulfid, Graphit, Bariumsulfat, Zinksulfid, Bleiborosilikat, Kohlefasern, Glasfasern und/oder Keramikfasern als Füllstoffe zugegeben werden. Die Teilchengröße der Füllstoffe soll bevorzugt im Bereich von 15-80 nm liegen, d. h. sie sollen möglichst fein verteilt polymere Kunststoffbasis eingebracht sein. Die Druckschrift bezeichnet dieses Einbringen der Füllstoffe in die polymere Kunststoffbasis als Compoundierung des Basiskunststoffs. Das Gleitschichtmaterial wird dann auf einen profilierten Träger, ein Lochblech oder ein Streckmetall als Stützschicht oder Trägerschicht aufextrudiert.

DE 10 2009 010 459 A1 beschreibt einen Gleitlagerverbundwerkstoff mit einer metallischen Stütz- oder Trägerschicht und einer Kunststoffgleitschicht. Es wird vorgeschlagen, bei der metallischen Stütz- oder Trägerschicht durch insbesondere Lasertechnik Vertiefungen mit die Vertiefungen flankierenden Schmelzaufwerfungen herzustellen, die Hintergriffsmöglichkeiten für die Kunststoffgleitschicht bilden. Die Kunststoffgleitschicht umfasst ein thermoplastisches oder duroplastisches Material, insbesondere PPS, PA, PEEK oder PPA. Als Füllstoffe sind genannt PTFE, Graphit, Aramid, PEEK, PI, Glimmer oder Fe₂O₃ oder Kohlenstofffasern. Weiter können haftvermittelnde Polymere, wie PFA, FEP, PES, PESU, mit einem Volumenanteil von bis zu 10 % beigemischt sein.

US 2014/0044385 A1 offenbart einen Gleitlagerverbundwerkstoff mit einer metallischen Stützschicht aus einem Aluminiumgitter, in welche ein Gleitschichtmaterial auf Basis eines Fluorpolymers, insbesondere aus PCTFE, PTFE PFA, FEP, ETFE, PVDF, PVF einimprägniert ist. Als Füllstoffe sind genannt Glasfasern, Kohlenstofffasern, Aramid, anorganische Materialien, keramische Materialien, Kohlenstoff, Glas, Graphit, Aluminiumoxid, Molybdändisulfid, Bronze, Siliziumcarbid, Gewebe, Pulver, Kugeln, thermoplastische Materialien, PI, PAI, PPS, PPSO₂, LCP, PEEK, aromatische Polyester, mineralische Materialien, Wollastonit, Bariumsulfat oder Kombinationen hiervon.

DE19524968 A1 offenbart einen Gleitlagerverbundwerkstoff mit einem Matrixmaterial und einem Gleitmaterial aus einem Fluorthermoplasten mit sowohl Bornitrid als auch einer Metallverbindung mit Schichtstruktur. Bei dem Fluorthermoplasten handelt es sich vorzugsweise um PTFE oder PTFE mit Zusätzen eines oder mehrerer Fluorthermoplasten aus PTFE, PCTFE, ECTFE, PVDF oder FEP. Das Matrixmaterial ist entweder ein Bronzegerüst oder ein thermoplastischer Kunststoff wie z.B. PPS, PA, PVDF, PES, PSU, PEEK, PI, PA oder PEI.

Der vorliegenden Erfindung liegt hingegen die Aufgabe zugrunde, einen Gleitlagerwerkstoff der eingangs genannten Art dahingehend zu verbessern, dass sein Reibwert, insbesondere sein Haftreibungswert, verringert wird, und zwar in Richtung eines Reibwerts wie er bei Gleitlagerverbundwerkstoffen mit einem PTFE basierten Gleitschichtmaterial ohne weiteres erreicht wird. Hierbei soll aber die die Verschleißbeständigkeit jedenfalls nicht wesentlich verringert werden.

Diese Aufgabe wird durch einen Gleitlagerverbundwerkstoff der eingangs genannten Art erfindungsgemäß gelöst, der dadurch gekennzeichnet ist, dass das Gleitschichtmaterial 65 - 90 Vol.-% PVDF als polymere Kunststoffbasis und weiter 5 - 30 Vol.-% PTFE umfasst und weiter 5 - 25 Vol.-% eines Füllstoffs in compoundierter Form umfasst, wobei die polymere Kunststoffbasis matrixbildend ist, und dass der Füllstoff in compoundierter Form partikelförmig vorliegt und in der matrixbildenden polymeren Kunststoffbasis aufgenommen ist, und dass der Füllstoff in compoundierter Form Thermoplaste und weitere tribologisch wirksame Stoffe umfasst, wobei der Anteil der Thermoplaste an der compoundierten Form 40-95 Vol.% und der Anteil der weiteren tribologisch wirksamen Stoffe an der compoundierten Form entsprechend 60-5 Vol.-% beträgt, und dass der Füllstoff in compoundierter Form als Thermoplaste einzeln oder in Kombination zu mehreren Polyaryletherketon (PAEK), insbesondere Polyetheretherketon (PEEK), Polyamide (PA), Polyester (PET), Polyethersulfon (PES), Polyphenylensulfid (PPS), Polybutylenterephthalat (PBT) umfasst.

Ausgehend von dem vorstehend mitgeteilten Stand der Technik wurde zunächst versucht, einem PVDF basierten Gleitschichtmaterial PTFE und weitere reibungsvermindernde Festschmierstoffe zuzusetzen, was aber nicht zu der erhofften Reduzierung des Reibwerts insbesondere bei Haftreibung geführt hat. Überraschenderweise zeigte sich aber, dass bei einem PVDF basierten Gleitschichtmaterial durch Zugabe eines an sich die Verschleißbeständigkeit erhöhenden aber auch den Reibwert erhöhenden Füllstoffs in compoundierter Form eine Herabsetzung des Reibwerts erreicht wird, was nicht zu erwarten war.

In weiterer Konkretisierung des erfindungsgemäßen Gleitlagerverbundwerkstoffs erweist es sich als vorteilhaft, wenn das Gleitschichtmaterial 65 - 80 Vol.-%, insbesondere 65 - 75 Vol.-% PVDF als polymere Kunststoffbasis umfasst.

Weiter erweist es sich als vorteilhaft, wenn das Gleitschichtmaterial wenigstens 10 Vol.-%, insbesondere wenigstens 15 Vol.-%, insbesondere wenigstens 18 Vol.-% und insbesondere höchstens 25 Vol.-%, insbesondere höchstens 22 Vol.-% PTFE umfasst.

Als ganz besonders vorteilhaft erweist es sich, wenn der Füllstoff in compoundierter Form 60 - 95 Vol.-% Polyaryletherketon (PAEK) als Thermoplast umfasst. Hierbei bildet also Polyaryletherketon (PAEK) die Kunststoffbasis, welche die weiteren tribologisch wirksamen Stoffe matrixbildend aufnimmt und einschließt. Die genannten 60 - 95 Vol.-% beziehen sich hierbei nur auf den Füllstoff in compoundierter Form, also nicht auf das Gleitschichtmaterial, welches den Füllstoff in compoundierter Form als Partikel aufnimmt. Vorzugsweise ist das Polyaryletherketon (PAEK) von einem Polyetheretherketon (PEEK) gebildet.

Es erweist sich weiter als vorteilhaft, wenn der Füllstoff in compoundierter Form als weitere tribologisch wirksame Stoffe einzeln oder in Kombination Kohlenstofffasern und/oder Graphit und/oder Titandioxid und/oder Zinksulfid und/oder PTFE umfasst.

Insbesondere erweist es sich als vorteilhaft, wenn der Füllstoff in compoundierter Form 5-15, insbesondere 8 - 12 Vol.-% Kohlenstofffasern umfasst.

Insbesondere erweist es sich als vorteilhaft, wenn der Füllstoff in compoundierter Form 5-15 Vol.-%, insbesondere 5-10 Vol.-%, insbesondere 6-8 Vol.-% Graphit umfasst.

Insbesondere erweist es sich als vorteilhaft, wenn der Füllstoff in compoundierter Form 2-8 Vol.-%, insbesondere 2-6 Vol.-%, insbesondere 3-5 Vol.-% Titandioxid umfasst.

Insbesondere erweist es sich als vorteilhaft, wenn der Füllstoff in compoundierter Form 2-8 Vol.-%, insbesondere 2-6 Vol.-%, insbesondere 3-5 Vol.-% Zinksulfid umfasst.

Insbesondere erweist es sich als vorteilhaft, wenn der Füllstoff in compoundierter Form 2-20 Vol.-%, insbesondere 2-15 Vol-%, insbesondere 2-10 Vol-% PTFE umfasst.

Als besonders vorteilhaft erweist es sich, wenn der Füllstoff in compoundierter Form 60 - 95 Vol.-%, insbesondere 60 - 85 Vol.-%, insbesondere 65 - 85 Vol.-%, insbesondere 70 -80 Vol.-% PEEK umfasst und als weitere tribologisch wirksame Stoffe 5-15 Vol.-%, insbesondere 8 -
12 Vol.-% Kohlenstofffasern und 5-10 Vol.-%, insbesondere 5-8 Vol.-%, insbesondere 6-8 Vol.-% Graphit und 2-6 Vol.-%, insbesondere 2-5 Vol.-%, insbesondere 3-5 Vol.-% Titandioxid und 2-6
Vol.-%, insbesondere 2-5 Vol.-%, insbesondere 3-5 Vol.-% Zinksulfid oder statt Zinksulfid 2-10 Vol.-% PTFE umfasst.

Obschon es nicht ausgeschlossen ist und es sich als vorteilhaft erweisen kann, wenn dem Gleitschichtmaterial weitere tribologisch wirksame Stoffe, insbesondere weitere verschleißmindernde Komponenten, wie insbesondere Festschmierstoffe wie z.B. BaSO₄, hex. BN, MoS₂, Bi₂S₃, Calcium-Phosphate, WS₂, CaF₂, Aramid als Pulver oder Faser, außerhalb des Füllstoffs in compoundierter Form zusätzlich beigegeben sind, wird auch für Ausführungsformen Schutz beansprucht, bei denen das Gleitschichtmaterial und/oder dessen Füllstoff in compoundierter Form aus den jeweiligen vorausgehend genannten Komponenten besteht.

Des Weiteren erweist es sich als vorteilhaft, wenn die mittlere Partikelgröße der dem Gleitschichtmaterial auf Polymerbasis zuzusetzenden Füllstoffe in compoundierter Form < 400 µm, insbesondere < 300 µm, insbesondere < 250 µm und weiter insbesondere zwischen 50 µm und 200 µm beträgt. Dies ist dann der Fall, wenn wenigstens 90%, insbesondere wenigstens 95%, des gewichtsprozentualen Anteils der Partikel des Füllstoffs in compoundierter Form innerhalb der vorstehend jeweils angegebenen Bereiche liegt.

Als weiterer Parameter einer mittleren Partikelgröße kann die Fläche der dem Gleitschichtmaterial auf Polymerbasis zugesetzten Füllstoffe in compoundierter Form im fertigen Produkt in einem Querschliff betrachtet werden. Dabei erweist es sich als vorteilhaft, wenn die Fläche der jeweiligen Partikel des compoundierten Füllstoffs in einem Querschliff betrachtet maximal 0,25 mm², insbesondere maximal 0,2 mm², insbesondere maximal 0,15 mm² und weiter insbesondere 0,5-0,15 mm² beträgt.

Der hier beschriebene Gleitlagerverbundwerkstoff eignet sich in besonderem Maße aufgrund seines Reibwerts und aufgrund seiner Verschleißbeständigkeit für die Herstellung von Gleitlagerelementen, insbesondere in Form gerollter Buchsen aus dem Gleitlagerverbundwerkstoff, die als Gleitlagerelemente bei Fahrzeugsitzlehnenverstellvorrichtungen verwendet werden. Sie sind sehr verschleißbeständig und haben eine hinreichend geringe Haftreibung, die jedoch gleichwohl hinreichend hoch ist, um die bei Fahrzeugsitzlehnenverstellvorrichtungen zum Teil geforderte selbsthemmende Reibungsfunktion ausüben zu können. Ein weiteres Anwendungsgebiet dieser Gleitlager sind hydraulische Radialkolbenmotoren oder -pumpen, bei denen die Anfahrmomente entscheidend für die Auslegung der Komponenten sind.

Weitere Merkmale, Einzelheiten und Vorteile ergeben sich aus den beigefügten Patentansprüchen und der zeichnerischen Darstellung und nachfolgenden Beschreibung des erfindungsgemäßen Gleitlagerverbundwerkstoffs.

In der Zeichnung zeigt:
- Figur 1: eine schematische Schnittansicht eines erfindungsgemäßen Gleitlagerverbundwerkstoffs;
- Figur 2: Ergebnisse einer Haftreibungsmessung;
- Figur 3: Ergebnisse einer Verschleißmessung und
- Figur 4: eine schematische Darstellung einer Prüfanordnung.

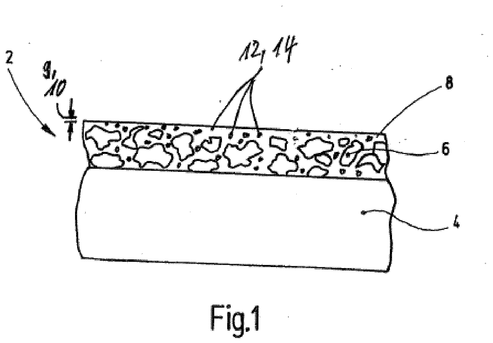

Figur 1 zeigt einen insgesamt mit dem Bezugszeichen 2 bezeichneten Gleitlagerverbundwerkstoff mit einer metallischen Stützschicht 4 aus Stahl und einer metallischen porösen Trägerschicht 6, insbesondere aus Bronze, die ein Porenvolumen bezogen auf das Volumen der Trägerschicht von vorzugsweise wenigstens 25 Vol-%, insbesondere wenigstens 30 Vol.-%, insbesondere wenigstens 40 Vol.-% begrenzt. In die Poren der porösen Trägerschicht 6 ist ein Gleitschichtmaterial 8 auf polymerer Kunststoffbasis, nämlich auf PVDF-Basis, eingebracht, welches nicht nur die Poren der Trägerschicht 6 vorzugsweise vollständig ausfüllt, sondern auch einen eine Gleitschicht 9 bildenden Überstand 10 über der porösen Trägerschicht 6 bildet.

In die polymere von PVDF gebildete Kunststoffbasis des Gleitschichtmaterials 8 ist ein Füllstoff 12 eingebracht und matrixartig durch die PVDF-Kunststoffbasis aufgenommen. Dieser Füllstoff 12 liegt in compoundierter Form partikelförmig vor, so wie dies eingangs erläutert worden ist. Die Partikelgröße dieses Füllstoffs 12 in compoundierter Form wurde eingangs angegeben. Die hier angedeuteten Partikel 14 sind daher nicht maßstabsgetreu dargestellt und (zeichnerisch nicht darstellbar) dichter verteilt. Die stoffliche Zusammensetzung des Füllstoffs 12 bzw. der Füllstoffpartikel 14 in compoundierter Form sind eingangs angegeben. Eine bevorzugte Zusammensetzung des Füllstoffs 12 umfasst 75 Vol.-% PEEK, 10 Vol.-% Kohlenstofffasern, 7 Vol.-% Graphit, 4 Vol.-% Titandioxid und 4 Vol.-% Zinksulfid und ist in der nachfolgend eingeblendeten Tabelle 1 aufgeführt.

Die nachstehende Tabelle 1 umfasst acht Vergleichswerkstoffe und als Nummer 9 einen erfindungsgemäßen Gleitlagerverbundwerkstoff mit einem erfindungsgemäßen Gleitschichtmaterial 8. Das Gleitschichtmaterial 8 des erfindungsgemäßen Gleitlagerverbundwerkstoffs 2 gemäß Nummer 9 ist gebildet aus 70 Vol.-% PVDF als polymere Kunststoffbasis und 20 Vol.-% PTFE sowie 10 Vol.-% des vorstehend genannten PEEK-basierten Füllstoffs 12 in compoundierter Form in Form homogen und dicht verteilter Partikel 14. In dem Gleitschichtmaterial 8 liegen also die tribologisch wirksamen Stoffe nicht jeweils separat innerhalb der matrixbildenden PVDF-Kunststoffbasis vor, sondern sie bilden einen Füllstoff 12 bzw. Füllstoffpartikel 14 in compoundierter Form.

**TABELLE**

| | | Zusammensetzung | | |
|---|---|---|---|---|
| Beispiel Nr. | Polymerbasis | Material | [Vol.-%] | [Gew.-%] |
| 1 | PTFE | PTFE | 75 | 66 |
| | | ZnS | 17 | 28 |
| | | PFA | 5 | 4 |
| | | C-Fasern | 3 | 2 |
| 2 | PTFE | PTFE | 75 | 75,9 |
| | | Bornitrid | 10 | 10,6 |
| | | Pigment | 1 | 2,1 |
| | | PEEK in compoundierte Form, davon: | 15 davon: | 11,4 davon: |
| | | 75 Vol.-% (60 Gew.-%) PEEK | 11,25 | 6,8 |
| | | 10 Vol.-% (10 Gew.-%) C-Fasern | 1,5 | 1,2 |
| | | 7 Vol.-% (10 Gew.-%) Graphit | 1,05 | 1,1 |
| | | 4 Vol.-% (10 Gew.-%) Ti02 | 0,6 | 1,2 |
| | | 4 Vol.-% (10 Gew.-%) ZnS | 0,6 | 1,1 |
| 3 | PTFE | PTFE | 74 | 69,5 |
| | | Ti02 | 10 | 18,1 |
| | | Pigment | 1 | 2,0 |
| | | PEEK in compoundierte Form, davon: | 15 davon | 10,4 davon: |
| | | 75 Vol.-% (60 Gew.-%) PEEK | 11,25 | 6,2 |
| | | 10 Vol.-% (10 Gew.-%) C-Fasern | 1,5 | 1,1 |
| | | 7 Vol.-% (10 Gew.-%) Graphit | 1,05 | 1,0 |
| | | 4 Vol.-% (10 Gew.-%) Ti02 | 0,6 | 1,1 |
| | | 4 Vol.-% (10 Gew.-%) ZnS | 0,6 | 1,0 |
| 4 | PVDF | PVDF | 77 | 65,5 |
| | | PTFE | 10 | 21,5 |
| | | BaSO4 | 10 | 10,5 |
| | | C-Fasern | 3 | 2,5 |
| 5 | PVDF | PVDF | 70 | 58,6 |
| | | PTFE | 20 | 20,8 |
| | | BaS04 | 10 | 20,6 |
| 6 | PVDF | PVDF | 55 | 42,5 |
| | | PTFE | 30 | 28,9 |
| | | BaS04 | 15 | 28,6 |
| 7 | PVDF | PVDF | 65 | 54,8 |
| | | PTFE | 20 | 21,0 |
| | | BaS04 | 10 | 20,8 |
| | | Aramid-Pulver | 5 | 3,4 |
| 8 | PVDF | PVDF | 70 | 65,5 |
| | | PTFE | 30 | 34,5 |
| 9 | PVDF | PVDF | 70 | 67,4 |
| | | PTFE | 20 | 23,7 |
| | | PEEK in compoundierte Form, davon: | 10 davon: | 8,9 davon: |
| | | 75 Vol.-% (60 Gew.-%) PEEK | 7,5 | 5,3 |
| | | 10 Vol.-% (10 Gew.-%) C-Fasern | 1,0 | 0,9 |
| | | 7 Vol.-% (10 Gew.-%) Graphit | 0,7 | 0,9 |
| | | 4 Vol.-% (10 Gew.-%) Ti02 | 0,4 | 0,9 |
| | | 4 Vol.-% (10 Gew.-%) ZnS | 0,4 | 0,9 |

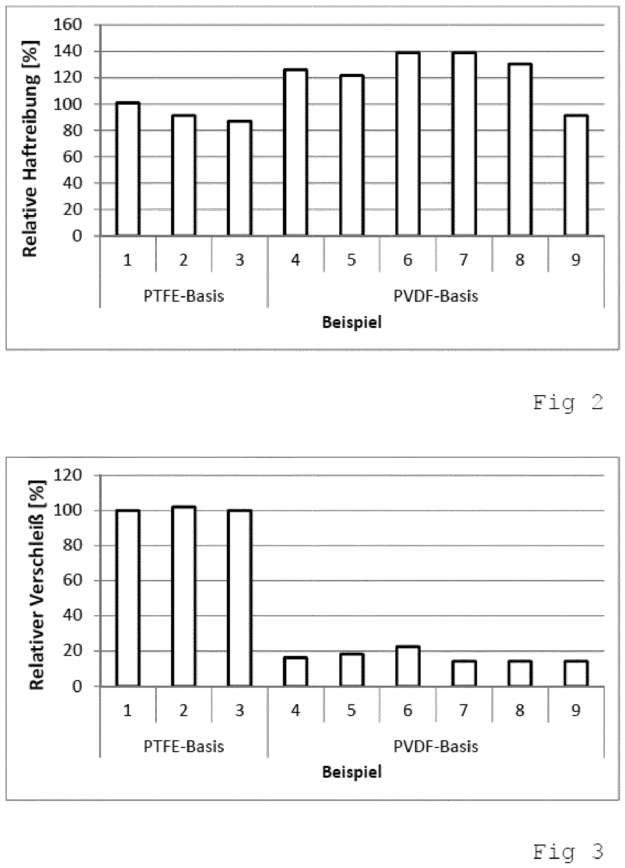

Die Figuren 2 und 3 zeigen die Ergebnisse von Haftreibung und Verschleißmessung bei auf Buchsenform mit einer Stoßfuge gerollten Gleitlagerelementen des in Figur 1 dargestellten jeweils identischen Aufbaus, wobei das Gleitschichtmaterial 8 mit Füllstoffen in der Tabelle 1 Nummer 1 bis 9 jeweils in seiner stofflichen Zusammensetzung sowohl in Volumenprozent als auch in Gewichtsprozent jeweils bezogen auf das Gleitschichtmaterial 8 angegeben ist.

Die Prüfung der tribologischen Eigenschaften erfolgte mit den nachfolgend aufgeführten Prüfparametern.

**Prüfparameter:**

| | **Haftreibungsprüfung** | **Verschleißprüfung** |
|---|---|---|
| Bewegungsart | Rotation, reversierend, ± 360° | Rotation, reversierend, ± 360° |
| F_{N} | 750 N | 1500 N |
| v | 0,015 m/s | 0,030 m/s |
| Schmierung | Fett, lithiumverseift | Fett, lithiumverseift |
| Gegenkörper-Werkstoff | Sintermetall | Sintermetall |
| Gegenkörper-Rauheit Rz | 2,5 µm | 2,5 µm |

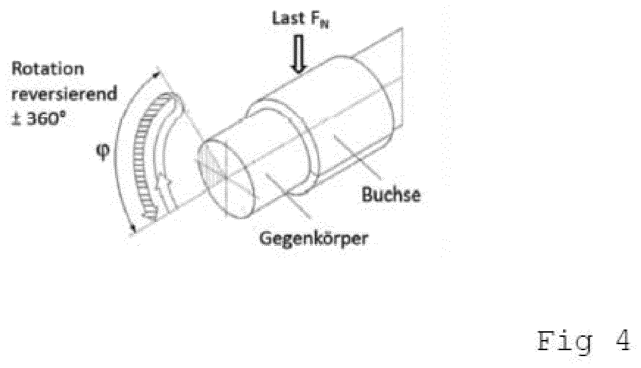

Der Verschleiß der Gleitlager wurde in einem fettgeschmierten Lauf mit reversierender Rotationsbewegung mit mittlerer Geschwindigkeit von 0,03 m/s getestet, während für die Haftreibungsmessung eine mittlere Geschwindigkeit von 0,015 m/s verwendet wurde. Hierbei rotiert das buchsenförmige Gleitlagerelement nicht kontinuierlich, sondern es wird um abwechselnd jeweils eine volle Umdrehung in die eine Umfangsrichtung und wieder zurück und in die andere Umfangsrichtung und wieder zurück in Bezug auf den in der Öffnung angeordneten als Welle dargestellten Gegenkörper bewegt. Die Anordnung ist schematisch in Figur 4 dargestellt. Hierbei wird also das buchsenförmige Gleitlagerelement gegenüber dem Gegenkörper hin und her rotierend angetrieben. Dabei wird die Gleitlagerbuchse in radialer Richtung unter einer Federvorspannung mit einer Kraft F_{N} von 1500 N bei der Verschleißmessung und von 750 N bei der Haftreibungsmessung belastet.

Die buchsenförmigen Gleitlagerelemente gemäß Tabelle Nr. 1 bis 9 wurden unter jeweils gleichen Bedingungen getestet. Für die Verschleißmessung wurde der reversierende Rotationsbetrieb 20 Stunden lang ausgeführt, und es wurde dann der jeweilige Verschleiß des Gleitschichtmaterials an der Buchseninnenseite gemessen und in der Figur 3 in relativen Einheiten aufgetragen.

Für die Messung der Haftreibung wird das jeweilige buchsenförmige Gleitlagerelement innerhalb des Prüfstands mit der vorgegebenen Last F_{N} für 20 Stunden beaufschlagt. Im Anschluss hieran wurde eine Reibwertmessung mittels Drehmomenterfassung ausgehend vom Stillstand, also eine Haftreibungsmessung, ausgeführt, deren Ergebnisse wiederum in relativen Einheiten in der Figur 2 aufgetragen sind, wobei ein Mittelwert aus 3 solchen Messungen (jeweils nach 20 Stunden Lasteinwirkung) genommen wurde.

Bei den Werkstoffen bzw. Gleitschichtmaterialien der Nummern 1 bis 9 der Tabelle 1 wurden Füllstoffe als Einzelfüllstoffe oder als compoundierter Füllstoff, d.h. gemahlener compoundierter Füllstoff in Partikelform, zugesetzt.

Bei der Herstellung der Gleitschichtmaterialien auf PTFE-Basis nach Nummern 1, 2 und 3 wurden die Füllstoffe als Einzelfüllstoffe/oder als gemahlener Füllstoff in compoundierter Form in eine wässrige PTFE-Dispersion gemischt, und anschließend wurde das PTFE ausgefällt. Das so hergestellte Gleitschichtmaterial wurde in die Poren einer auf die Stützschicht 4 aus Stahl porös aufgesinterten Trägerschicht 6 aus Bronze eingewalzt und in an sich üblicher Form thermisch behandelt.

Bei den Beispielen 4 bis 9 wurde aus den dort genannten Komponenten eine Pulvertrockenmischung hergestellt. Diese wurde auf eine Stützschicht aus Stahl mit einer porös aufgesinterten Trägerschicht 6 aus Bronze aufgestreut, unter Temperatur erschmolzen und in die Poren der Trägerschicht eingewalzt.

Aus diesen streifenförmigen Flachmaterialien wurden in einem Biegerollverfahren zylindrische Buchsen mit einer Stoßfuge hergestellt, die dann wie vorstehend beschrieben getestet wurden.

### Zu den Ergebnissen:

Die PTFE-Basis Gleitschichtmaterialien gemäß Nummern 1 bis 3 zeigen unter den ein hinreichendes zufriedenstellendes Haftreibungsverhalten, was primär auf die PTFE-Basis zurückzuführen ist. Bei diesem PTFE-BasisGleitschichtmaterial dienen die in der Tabelle 1 aufgeführten Füllstoffe, unabhängig ob sie einzeln zugegeben und/oder in compoundierter Form, nicht primär zur Reduzierung des Reibwerts, sondern zur Erhöhung der Verschleißbeständigkeit. Bei einem reinen zu 100% aus PTFE bestehenden Gleitschichtmaterial wären der Reibwert und insbesondere die Haftreibung geringer als bei den Werkstoffen gemäß Nr. 1 bis 3 in Figur 2 angegeben. Sie wären für viele Anwendungen, bei denen ein gewisses "Slip/Stick"-Verhalten gefordert ist, also ein geringes "Ruck-Gleiten" beim Anfahren verlangt wird, nicht brauchbar. Bei dem PTFE-Basiswerkstoff führt also die Zugabe von Füllstoffen, und insbesondere eines Füllstoffs in compoundierter Form, zu einer Erhöhung der Haftreibung und Verbesserung der Veschleißfestigkeit verglichen zum reinen PTFE-Basisgleitschichtmaterial. Trotz der Zugabe der verschleißmindernden Füllstoffe bei Beispielen Nr. 1 bis 3 ist die Verschleißbeständigkeit, die in Figur 3 bei Nummern 1 bis 3 angegeben ist, für viele Anwendungen aber nicht hinreichend.

Die Gleitschichtmaterialien auf PVDF-Basis, insbesondere gemäß Nummern 4 bis 8, zeigen eine zufriedenstellende Verschleißbeständigkeit, und zwar unabhängig davon, ob die Füllstoffe bei Nummern 4 bis 7 in herkömmlicher Form, also einzeln, jeweils für sich bei der Herstellung der Pulvermischung zugegeben werden. Bei den getesteten Gleitlagerelementen mit einem Gleitschichtmaterial gemäß Nummern 4 bis 7 ist hingegen der Reibwert, und zwar insbesondere die Haftreibung, zu hoch. Sie liegt deutlich oberhalb der Haftreibung von PTFE-Basisgleitschichtmaterialien. Um den Reibwert hier zu reduzieren, wurde mit Vergleichsbeispiel Nummer 8 der Versuch unternommen, auf zwar verschleißmindernde aber reibwerterhöhende Füllstoffe zu verzichten und stattdessen den PTFE-Gehalt auf 30 Vol.-% zu erhöhen. Es wurde erwartet, dass die verstärkte Zugabe von PTFE als hervorragendem reibwerterniedrigendem Festschmierstoff eine deutliche Reduzierung der Haftreibung würde bewirken können. Dies war aber nicht der Fall, wie Figur 2, bei Nummer 8 zeigt (verglichen mit Nummern 4. - 7.). Überraschenderweise führte aber die Zugabe eines verschleißmindernden Füllstoffs in compoundierter Form gemäß Nummer 9 zu einer signifikanten Reduzierung der Haftreibung, und zwar bis in den Bereich der PTFE-Basiswerkstoffe. Dies war bei dem PEEK-basierten compoundierten Füllstoff umso verwunderlicher, als dieser Füllstoff in der angegebenen Zusammensetzung als solcher (also nicht eingebettet in eine andere Polymer Matrix) einen höheren Reibwert aufweist als ein 100% PVDF-Gleitschichtmaterial. Es konnte daher nicht von einer Reduzierung des Reibwerts ausgegangen werden, was sich aber dennoch einstellte. Die Verschleißbeständigkeit liegt bei Nummer 9 dennoch vorteilhafterweise im Bereich der Vergleichsbeispiele 4 bis 8.

Der erfindungsgemäße Werkstoff gemäß Nummer 9 erweist sich als gut geeignet zur Herstellung von Gleitlagerelementen in Form von gerollten Buchsen und insbesondere Bundbuchsen, zur Verwendung in Kraftfahrzeugsitzlehnenverstellvorrichtungen. Gerade hier erweis es sich auch als vorteilhaft, wenn der Überstand des Gleitschichtmaterials über die dreidimensional poröse Trägerschicht höchstens 60 µm, insbesondere höchstens 50 µm, insbesondere höchstens 30 µm, insbesondere höchstens 20 µm und weiter insbesondere höchstens 20 µm beträgt. Dies eröffnet die Möglichkeit, Scharnierteile mit bereits eingebrachten Gleitlagerelementen zu lackieren und im Anschluss thermisch zu behandeln. Es wurde nämlich weiter erfindungsgemäß festgestellt, dass bei Verwendung eines nur dünnen Überstands des Gleitschichtmaterials eine vorteilhafte Unempfindlichkeit gegen Verformungen bei typischen thermischen Behandlungen beim Lackieren gegeben ist.

Die erfindungsgemäße Entwicklung bestätigt, dass die Verschleißfestigkeit von PVDF-basierten Gleitschichtmaterialien bei hier in Rede stehenden tribologischen Anwendungen bei Gleitlagerverbundwerkstoffen und hieraus hergestellten Gleitlagern zu einem dominierenden Teil durch die PVDF-Basis selbst bereitgestellt wird. Eine Reibwertreduzierung lässt sich selbst mit dem besten Festschmierstoff in Form von PTFE nicht hinreichend erzielen. Erst in Zusammenwirkung mit einem Füllstoff in compoundierter Form, der sich als solcher eigentlich als reibwerterhöhend auswirken sollte, wird eine solche Reibwertherabsetzung erreicht, und zwar ohne dass sich die Verschleißbeständigkeit hierdurch signifikant verschlechtert. Die Zugabe von Füllstoffen in compoundierter Form der hier genannten Zusammensetzung und Darreichungsform vermag die Wirkung des reibwertvermindernden PTFE zu unterstützen, wobei dies im Einzelnen noch nicht vollständig verstanden wird.

## Patentansprüche

1. Gleitlagerverbundwerkstoff (2) mit einer metallischen Stützschicht (4), optional mit einer darauf aufgebrachten porösen Trägerschicht (6) und mit einem in die Poren der Trägerschicht (6) eingebrachten oder auf die metallische Stützschicht (4) aufgebrachten Gleitschichtmaterial (8) auf polymerer Kunststoffbasis, mit die tribologischen Eigenschaften verbessernden Füllstoffen, wobei das Gleitschichtmaterial (8) PVDF als polymere Kunststoffbasis umfasst und PTFE enthält, **dadurch gekennzeichnet,**
**dass** das Gleitschichtmaterial (8) 65 - 90 Vol.-% PVDF als polymere Kunststoffbasis und weiter 5 - 30 Vol.-% PTFE umfasst und weiter 5 - 25 Vol.-% eines Füllstoffs (12) in compoundierter Form umfasst, wobei die polymere Kunststoffbasis matrixbildend ist, und dass der Füllstoff (12) in compoundierter Form partikelförmig vorliegt und in der matrixbildenden polymeren Kunststoffbasis aufgenommen ist, und dass der Füllstoff (12) in compoundierter Form einen Thermoplasten und weitere tribologisch wirksame Stoffe umfasst, wobei der Anteil des Thermoplasten an der compoundierten Form 40-95 Vol.% und der Anteil der weiteren tribologisch wirksamen Stoffe an der compoundierten Form entsprechend 60-5 Vol.-% beträgt, und dass der Füllstoff (12) in compoundierter Form als Thermoplasten einzeln oder in Kombination zu mehreren Polyaryletherketon (PAEK), insbesondere Polyetheretherketon (PEEK), Polyamide (PA), Polyester (PET), Polyethersulfon (PES), Polyphenylensulfid (PPS), Polybutylenterephthalat (PBT) umfasst.

2. Gleitlagerverbundwerkstoff (2) nach Anspruch 1,
**dadurch gekennzeichnet, dass** das Gleitschichtmaterial (8) 65 - 80 Vol.-%, insbesondere 65 - 75 Vol.-% PVDF als polymere Kunststoffbasis umfasst.

3. Gleitlagerverbundwerkstoff (2) nach Anspruch 1 oder 2, **dadurch gekennzeichnet, dass** das Gleitschichtmaterial (8) wenigstens 10 Vol.-%, insbesondere wenigstens 15 Vol.-%, insbesondere wenigstens 18 Vol.-% und insbesondere höchstens 25 Vol.-%, insbesondere höchstens 22 Vol.-% PTFE umfasst.

4. Gleitlagerverbundwerkstoff (2) nach einem oder mehreren der vorstehenden Ansprüche, **dadurch gekennzeichnet, dass** der Füllstoff (12) in compoundierter Form 60 - 95 Vol.-% Polyaryletherketon (PAEK), insbesondere Polyetheretherketon (PEEK), als Thermoplast umfasst.

5. Gleitlagerverbundwerkstoff (2) nach einem oder mehreren der vorstehenden Ansprüche, **dadurch gekennzeichnet, dass** der Füllstoff (12) in compoundierter Form als weitere tribologisch wirksame Stoffe einzeln oder in Kombination Kohlenstofffasern und/oder Graphit und/oder Titandioxid und/oder Zinksulfid und/oder PTFE umfasst.

6. Gleitlagerverbundwerkstoff (2) nach Anspruch 5,
**dadurch gekennzeichnet, dass** der Füllstoff (12) in compoundierter Form 5-15, insbesondere 8 - 12 Vol.-% Kohlenstofffasern umfasst.

7. Gleitlagerverbundwerkstoff (2) nach Anspruch 5 oder 6, **dadurch gekennzeichnet, dass** der Füllstoff (12) in compoundierter Form 5-15 Vol.-%, insbesondere 5-10 Vol.-%, insbesondere 6-8 Vol.-% Graphit umfasst.

8. Gleitlagerverbundwerkstoff (2) nach Anspruch 5, 6 oder 7, **dadurch gekennzeichnet, dass** der Füllstoff (12) in compoundierter Form 2-8 Vol.-%, insbesondere 2-6 Vol.-%, insbesondere 3-5 Vol.-% Titandioxid umfasst.

9. Gleitlagerverbundwerkstoff (2) nach Anspruch 5, 6, 7 oder 8, **dadurch gekennzeichnet, dass** der Füllstoff (12) in compoundierter Form 2-8 Vol.-%, insbesondere 2-6 Vol.-%, insbesondere 3-5 Vol.-% Zinksulfid umfasst.

10. Gleitlagerverbundwerkstoff (2) nach Anspruch 5, 6, 7, 8 oder 9, **dadurch gekennzeichnet, dass** der Füllstoff (12) in compoundierter Form 20 Vol.-%, insbesondere 2-15 Vol-%, insbesondere 2-10 Vol-%, insbesondere 2-6 Vol.-% PTFE umfasst.

11. Gleitlagerverbundwerkstoff (2) nach Anspruch 5, 6, 7, 8, 9 oder 10, **dadurch gekennzeichnet, dass** der Füllstoff (12) in compoundierter Form 60 - 95 Vol.-%, insbesondere 60 - 85 Vol.-%, insbesondere 65 - 85 Vol.-%, insbesondere 70 - 80 Vol.-% PEEK umfasst und als weitere tribologisch wirksame Stoffe 5-15 Vol.-%, insbesondere 8 - 12 Vol.-% Kohlenstofffasern und 5-10 Vol.-%, insbesondere 5-8 Vol.-%, insbesondere 6-8 Vol.-% Graphit und 2-6 Vol.-%, insbesondere 2-5 Vol.-%, insbesondere 3-5 Vol.-% Titandioxid und 2-6 Vol.-%, insbesondere 2-5 Vol.-%, insbesondere 3-5 Vol.-% Zinksulfid oder statt Zinksulfid 2-6 Vol.-% PTFE umfasst.

12. Gleitlagerverbundwerkstoff (2) nach einem oder mehreren der vorstehenden Ansprüche, **dadurch gekennzeichnet, dass** die mittlere Partikelgröße der dem Gleitschichtmaterial (8) auf Polymerbasis zuzusetzenden Füllstoffe (12) in compoundierter Form < 400 µm, insbesondere < 300 µm, insbesondere < 250 µm und weiter insbesondere zwischen 50 µm und 200 µm beträgt.

13. Gleitlagerverbundwerkstoff (2) nach einem oder mehreren der vorstehenden Ansprüche, **dadurch gekennzeichnet, dass** die Fläche der dem Gleitschichtmaterial (8) auf Polymerbasis zugesetzten Füllstoffe (12) in compoundierter Form im fertigen Produkt in einem Querschliff betrachtet maximal 0,25 mm², insbesondere maximal 0,2 mm², insbesondere maximal 0,15 mm² und weiter insbesondere 0,5-0,15 mm² beträgt.

14. Gleitlagerverbundwerkstoff (2) nach einem oder mehreren der vorstehenden Ansprüche, **dadurch gekennzeichnet, dass** ein Überstand (10) des Gleitschichtmaterials (8) über die dreidimensional poröse Trägerschicht (6) höchstens 60 µm, insbesondere höchstens 50 µm, insbesondere höchstens 30 µm, insbesondere höchstens 20 µm und weiter insbesondere höchstens 20 µm beträgt.

15. Verwendung eines Gleitlagerverbundwerkstoffs nach einem oder mehreren der vorstehenden Ansprüche zur Herstellung eines Gleitlagerelements in Form einer gerollten Buchse mit einer Stoßfuge zur Verwendung bei einer Fahrzeugsitzverstellvorrichtung.

## Claims

1. Slide bearing composite material (2) with a metallic supporting layer (4), optionally with a porous backing layer (6) applied thereon, and with a sliding layer material (8), introduced into the pores of the backing layer (6) or applied to the metallic supporting layer (4), with a polymeric plastic base with fillers improving the tribological properties, wherein the sliding layer material (8) comprises PVDF as polymeric plastic base and contains PTFE, **characterised in that** the sliding layer material (8) comprises 65 - 90 vol% PVDF as polymeric plastic base and also comprises 5 - 30 vol% PTFE and also comprises 5 - 25 vol% of a filler (12) in compounded form, wherein the polymeric plastic base is matrix-forming, and that the filler (12) in compounded form is present in particulate form and is incorporated in the matrix-forming polymeric plastic base, and that the filler (12) in compounded form comprises a thermoplastic and further tribologically active substances, wherein the content of the thermoplastic in the compounded form is 40-95 vol.% and the content of the further tribologically active substances in the compounded form is, accordingly, 60-5 vol%, and that the filler (12) in compounded form comprises, as thermoplastic, individually or in combination with several polyaryletherketones (PAEK), in particular polyetheretherketone (PEEK), polyamides (PA), polyester (PET), polyethersulphone (PES), polyphenylene sulphide (PPS), polybutylene terephthalate (PBT).

2. Slide bearing composite material (2) according to claim 1, **characterised in that** the sliding layer material (8) comprises 65 - 80 vol%, in particular 65 - 75 vol% PVDF as polymeric plastic base.

3. Slide bearing composite material (2) according to claim 1 or 2, **characterised in that** the sliding layer material (8) comprises at least 10 vol%, in particular at least 15 vol%, in particular at least 18 vol% and in particular at most 25 vol%, in particular at most 22 vol% PTFE.

4. Slide bearing composite material (2) according to one or more of the preceding claims, **characterised in that** the filler (12) in compounded form comprises 60 - 95 vol% polyaryletherketone (PAEK), in particular polyetheretherketone (PEEK), as thermoplastic.

5. Slide bearing composite material (2) according to one or more of the preceding claims, **characterised in that** the filler (12) in compounded form comprises as further tribologically active substances, individually or in combination, carbon fibres and/or graphite and/or titanium dioxide and/or zinc sulphide and/or PTFE.

6. Slide bearing composite material (2) according to claim 5, **characterised in that** the filler (12) in compounded form comprises 5-15, in particular 8 - 12 vol% carbon fibres.

7. Slide bearing composite material (2) according to claim 5 or 6, **characterised in that** the filler (12) in compounded form comprises 5-15 vol%, in particular 5-10 vol%, in particular 6-8 vol% graphite.

8. Slide bearing composite material (2) according to claim 5, 6 or 7, **characterised in that** the filler (12) in compounded form comprises 2-8 vol%, in particular 2-6 vol%, in particular 3-5 vol% titanium dioxide.

9. Slide bearing composite material (2) according to claim 5, 6, 7 or 8, **characterised in that** the filler (12) in compounded form comprises 2-8 vol%, in particular 2-6 vol%, in particular 3-5 vol% zinc sulphide.

10. Slide bearing composite material (2) according to claim 5, 6, 7, 8 or 9, **characterised in that** the filler (12) in compounded form comprises 20 vol%, in particular 2-15 vol%, in particular 2-10 vol%, in particular 2-6 vol% PTFE.

11. Slide bearing composite material (2) according to claim 5, 6, 7, 8, 9 or 10, **characterised in that** the filler (12) in compounded form comprises 60 - 95 vol%, in particular 60 - 85 vol%, in particular 65 - 85 vol%, in particular 70 - 80 vol% PEEK and as further tribologically active substances 5-15 vol%, in particular 8-12 vol% carbon fibres and 5-10 vol%, in particular 5-8 vol%, in particular 6-8 vol% graphite and 2-6 vol%, in particular 2-5 vol%, in particular 3-5 vol% titanium dioxide and 2-6 vol%, in particular 2-5 vol%, in particular 3-5 vol% zinc sulphide or, instead of zinc sulphide, 2-6 vol% PTFE.

12. Slide bearing composite material (2) according to one or more of the preceding claims, **characterised in that** the average particle size of the fillers (12) in compounded form added to the polymer-based sliding layer material (8) amounts to < 400 µm, in particular < 300 µm, in particular < 250 µm and more particularly between 50 µm and 200 µm.

13. Slide bearing composite material (2) according to one or more of the preceding claims, **characterised in that** the area of the fillers (12) in compounded form added to the polymer-based sliding layer material (8) in the finished product, viewed in a transverse microsection, amounts to at most 0.25 mm², in particular at most 0.2 mm², in particular at most 0.15 mm² and more particularly 0.5-0.15 mm².

14. Slide bearing composite material (2) according to one or more of the preceding claims, **characterised in that** a projection (10) of the sliding layer material (8) above the three-dimensional porous backing layer (6) amounts to at most 60 µm, in particular at most 50 µm, in particular at most 30 µm, in particular at most 20 µm and more particularly at most 20 µm.

15. Use of a slide bearing composite material according to one or more of the preceding claims for the manufacture of a slide bearing element in the form of a wrapped bushing with a butt joint for use in a vehicle seat adjustment device.

## Revendications

1. Matériau composite de palier lisse (2) avec une couche d'appui métallique (4), facultativement avec une couche de support poreuse (6) appliquée sur celle-ci et avec un matériau de couche de glissement (8) en matière plastique polymère de base, introduit dans les pores de la couche de support (6) ou appliqué sur la couche d'appui métallique (4), avec des charges améliorant les propriétés tribologiques, dans lequel le matériau de couche de glissement (8) comprend du PVDF comme matière plastique polymère de base et contient du PTFE, **caractérisé en ce que**
le matériau de couche de glissement (8) comprend de 65 à 90 % en volume de PVDF en tant que matière plastique polymère de base et en outre de 5 à 30 % en volume de PTFE et en outre de 5 à 25 % en volume d'une charge (12) sous forme composite, dans lequel la matière plastique polymère de base forme une matrice, et **en ce que** la charge (12) sous forme composite est sous forme de particules et est reçue dans la matière plastique polymère de base formant une matrice, et **en ce que** la charge (12) sous forme composite comprend une matière thermoplastique et d'autres substances tribologiquement actives, dans lequel la proportion de la matière thermoplastique dans la forme composite est de 40 à 95 % en volume et la proportion des autres substances tribologiquement actives dans la forme composite est de 60 à 5 % en volume, et **en ce que** la charge (12) sous forme composite comprend comme matière thermoplastique, individuellement ou en combinaison de plusieurs, de la polyaryléthercétone (PAEK), en particulier de la polyétheréthercétone (PEEK), du polyamide (PA), du polyester (PET), de la polyétherulfone (PES), du polysulfure de phénylène (PPS), du polytéréphtalate de butylène (PBT).

2. Matériau composite de palier lisse (2) selon la revendication 1, **caractérisé en ce que** le matériau de couche de glissement (8) comprend de 65 à 80 % en volume, en particulier de 65 à 75 % en volume de PVDF en tant que matière plastique polymère de base.

3. Matériau composite de palier lisse (2) selon la revendication 1 ou 2, **caractérisé en ce que** le matériau de couche de glissement (8) comprend au moins 10 % en volume, en particulier au moins 15 % en volume, en particulier au moins 18 % en volume et en particulier au maximum 25 % en volume, en particulier au maximum 22 % en volume, de PTFE.

4. Matériau composite de palier lisse (2) selon une ou plusieurs des revendications précédentes, **caractérisé en ce que** la charge (12) sous forme composite comprend de 60 à 95 % en volume de polyaryléthercétone (PAEK), en particulier de polyétheréthercétone (PEEK), en tant que matière thermoplastique.

5. Matériau composite de palier lisse (2) selon une ou plusieurs des revendications précédentes, **caractérisé en ce que** la charge (12) sous forme composite comprend comme autres substances tribologiquement actives, individuellement ou en combinaison, des fibres de carbone et/ou du graphite et/ou du dioxyde de titane et/ou du sulfure de zinc et/ou du PTFE.

6. Matériau composite de palier lisse (2) selon la revendication 5, **caractérisé en ce que** la charge (12) sous forme composite comprend de 5 à 15, en particulier de 8 à 12 % en volume de fibres de carbone.

7. Matériau composite de palier lisse (2) selon la revendication 5 ou 6, **caractérisé en ce que** la charge (12) sous forme composite comprend de 5 à 15 % en volume, en particulier de 5 à 10 % en volume, en particulier de 6 à 8 % en volume de graphite.

8. Matériau composite de palier lisse (2) selon la revendication 5, 6 ou 7, **caractérisé en ce que** la charge (12) sous forme composite comprend de 2 à 8 % en volume, en particulier de 2 à 6 % en volume, en particulier de 3 à 5 % en volume de dioxyde de titane.

9. Matériau composite de palier lisse (2) selon la revendication 5, 6, 7 ou 8, **caractérisé en ce que** la charge (12) sous forme composite comprend de 2 à 8 % en volume, en particulier de 2 à 6 % en volume, en particulier de 3 à 5 % en volume de sulfure de zinc.

10. Matériau composite de palier lisse (2) selon la revendication 5, 6, 7, 8 ou 9, **caractérisé en ce que** la charge (12) sous forme composite comprend 20 % en volume, en particulier de 2 à 15 % en volume, en particulier de 2 à 10 % en volume, en particulier de 2 à 6 % en volume de PTFE.

11. Matériau composite de palier lisse (2) selon la revendication 5, 6, 7, 8, 9 ou 10, **caractérisé en ce que** la charge (12) sous forme composite comprend de 60 à 95 % en volume, en particulier de 60 à 85 % en volume, en particulier de 65 à 85 % en volume, en particulier de 70 à 80 % en volume de PEEK et, en tant qu'autres substances tribologiquement actives, de 5 à 15 % en volume, en particulier de 8 à 12 % en volume de fibres de carbone et de 5 à 10 % en volume, en particulier de 5 à 8 % en volume, en particulier de 6 à 8 % en volume de graphite et de 2 à 6 % en volume, en particulier de 2 à 5 % en volume, en particulier de 3 à 5 % en volume de dioxyde de titane et de 2 à 6 % en volume, en particulier de 2 à 5 % en volume, en particulier de 3 à 5 % en volume de sulfure de zinc ou, au lieu du sulfure de zinc, de 2 à 6 % en volume de PTFE.

12. Matériau composite de palier lisse (2) selon une ou plusieurs des revendications précédentes, **caractérisé en ce que** la taille de particule moyenne des charges (12) ajoutées au matériau de couche de glissement (8) en polymère de base est < 400 µm, en particulier < 300 µm, en particulier < 250 µm, et en particulier comprise entre 50 µm et 200 µm.

13. Matériau composite de palier lisse (2) selon une ou plusieurs des revendications précédentes, **caractérisé en ce que** la surface des charges (12) ajoutées au matériau de couche de glissement (8) en polymère de base est considérée sous forme composite dans le produit fini dans une section transversale de 0,25 mm² au maximum, en particulier de 0,2 mm² au maximum, en particulier de 0,15 mm² au maximum et en particulier de 0,5 à 0,15 mm².

14. Matériau composite de palier lisse (2) selon une ou plusieurs des revendications précédentes, **caractérisé en ce qu'**une saillie (10) du matériau de couche de glissement (8) au-dessus de la couche de support (6) poreuse tridimensionnelle est d'au plus 60 µm, en particulier d'au plus 50 µm, en particulier d'au plus 30 µm, en particulier d'au plus 20 µm et encore plus particulièrement d'au plus 20 µm.

15. Utilisation d'un matériau composite de palier lisse selon une ou plusieurs des revendications précédentes pour la fabrication d'un élément de palier lisse sous la forme d'une douille roulée avec un joint de butée destiné à être utilisé dans un dispositif de réglage de siège de véhicule.
